# EUROPEAN PATENT APPLICATION

(11) **EP 4 647 547 A1**
(43) Date of publication of application: **12.11.2025**
(21) Application number: 25171624.7
(22) Date of filing: 22.04.2025
(51) Int. Cl.: D06M 11/74, D06M 23/08, D06N 3/00

(54) **FLAME RETARDANT FABRICS**

(30) Priority: 19.04.2024 US 202463636464 P; 21.04.2025 US 202519185187
(71) Applicant: Innofa USA LLC, Eden, NC 27288 (US)
(72) Inventor: Cleyman, Johan, Eden, NC 27288 (US)
(74) Representative: Banse & Steglich Patentanwälte PartmbB

(57) **Abstract**

A fire retardant fabric includes a base fabric and expandable graphite particles secured to a surface of and/or embedded in the base fabric. The expandable graphite particles may be bonded or otherwise secured to the base fabric with an adhesive material. The fire retardant fabric may optionally include a web material over a surface of the base fabric to which the expandable graphite particles have been applied. Methods for manufacturing such a fire retardant fabric are also disclosed. Such a method may include applying expandable graphite particles and an adhesive material to a base fabric and, with the adhesive material, bonding or otherwise securing the expandable graphite particles to the base fabric.

## Description

### TECHNICAL FIELD

This disclosure relates generally to fabrics and, more specifically, to fire retardant fabrics. Even more specifically, this disclosure relates to a fire retardant fabric that includes a base fabric that carries particles of expandable graphite. This disclosure also relates to methods for manufacturing a flame retardant fabric by securing particles of expandable graphite, to a base fabric or otherwise incorporating particles of the expandable graphite into the base fabric.

### SUMMARY

In one aspect, a method for manufacturing a flame retardant fabric is disclosed. Such a method includes providing a base fabric. Optionally, the base fabric may be preheated. The method also includes applying particles (e.g., flakes, etc.) of expandable graphite and an adhesive material to the base fabric. The particles of expandable graphite may be substantially evenly applied or evenly applied to a surface of the base fabric. While on the base fabric, the particles of the expandable graphite and the adhesive material may be heated to bond the adhesive material to adjacent particles of the expandable graphite and to the base fabric.

The expandable graphite may have a high thermal conductivity, which is a measure of the ability of a material to conduct heat or, more specifically, the number of watts (W) conducted through the thickness (measured in meters (m)) of a material per a difference in temperature (K) from one side of the material to the other, or W/mK. For purposes of this disclosure, a material with a high thermal conductivity has a thermal conductivity of 25 W/mK or more. The expandable graphite may also have a high thermal effusivity, which is the measure of a material to exchange heat with its surroundings or, more specifically, the square root of the product of the material's thermal conductivity and the material's volumetric heat capacity, measured in units of Ws^{½}/m²K. For purposes of this disclosure, a material with a high thermal effusivity has a thermal effusivity of at least 250 Ws^{½}/m²K.

Expandable graphite expands when exposed to a sufficient temperature, for example, about 200° C.

The adhesive material may comprise particles of adhesive material, which may also be referred to as "adhesive particles." Alternatively, the adhesive material may coat the expandable graphite. The adhesive material may adhere to the base fabric and to adjacent particles of the expandable graphite, thus adhering the expandable graphite particles to the base fabric. The adhesive material may comprise a thermoplastic material, which softens and then melts when heated. A heated thermoplastic material may wick or otherwise be forced into the fabric, enabling the thermoplastic material to mechanically engage the base fabric as the thermoplastic material cools. The thermoplastic material may also adhere to and, optionally, mechanically engage the expandable graphite particles. Examples of adhesive particles that comprise thermoplastic materials include, but are not limited to, ethylene vinyl acetates (EVAs) and thermoplastic polyurethanes (TPUs).

The expandable graphite particles and adhesive particles may be mixed together to form a homogenous mixture. Mixing may be conducted in any suitable manner. Alternatively, the expandable graphite particles may be coated with the adhesive material. As another alternative, a mixture of the expandable graphite particles and adhesive particles may be applied to (e.g., scattered onto, printed onto, etc.) a transfer sheet or adhesive-coated expandable graphite particles may be applied to a transfer sheet.

A base fabric may be selected. The base fabric may be of any desired composition (e.g., it may include synthetic fibers, synthetic fiber blends, natural fibers, natural fiber blends, blends of natural and synthetic fibers, etc.). The base fabric may have any desired weight (e.g., it may be ultra light (i.e. less than 100 g/m²), lightweight (i.e., 100 g/m² to 170 g/m²), midweight (i.e., 170 g/m² to 340 g/m²), heavyweight (i.e., 340 g/m² to 400 g/m²), or ultra heavy (i.e., more than 400 g/m²).

The base fabric may be preheated to a temperature that enables the adhesive material to temporarily adhere to a surface of the base fabric. Additionally, the temperature to which the base fabric is heated may enable the expandable graphite particles to temporarily adhere to the adhesive material.

The expandable graphite particles and adhesive material may be evenly applied to the surface of the base fabric in any suitable manner. As an example, a powder scattering process may scatter a mixture of the expandable graphite particles and adhesive particles substantially evenly or evenly across the surface of the base fabric. As another example, a powder scattering process may scatter adhesive-coated expandable graphite particles substantially evenly or evenly across the surface of the base fabric. As yet another example, a transfer sheet carrying a substantially evenly spread layer or an evenly spread layer of a mixture of expandable graphite particles and adhesive particles or a substantially evenly spread layer or an evenly spread layer of adhesive-coated expandable graphite particles may be placed against the surface of the base fabric.

Optionally, a web material may be positioned over the expandable graphite particles and adhesive material and superimposed with the base fabric. A weight of the web material may be ultra light (i.e., under 100 g/m² (GSM)) or lightweight (i.e., 100 g/m² to 170 /m²). More specifically, the web material may have a weight of about 5 g/m² to about 200 g/m². The web material may comprise polyester, polyamide, polypropylene, or polyethylene. Alternatively, the web material may comprise (e.g., be made from, carry, etc.) the adhesive material; such a web material may be used in place of or in addition to the adhesive particles.

With the expandable graphite particles and adhesive material in place against the surface of the base fabric and the optional web material in place over the mixture, the base fabric, the expandable graphite particles, the adhesive material, and the optional web material may be subjected to sufficient heat and/or pressure to enable the adhesive material to adhere to base fabric and to adjacent expandable graphite particles without expanding the expandable graphite particles. In embodiments where the adhesive material comprises a thermoplastic material, the heat and/or pressure may enable or cause the adhesive material to flow into the base fabric (e.g., into spaces between yarns from which the base fabric is formed (e.g., knit, woven, etc.), into yarns from which the base fabric is formed, etc., by wicking, by force under pressure, etc.). As adhesive material flows into and/or is pressed into the base fabric, some of the expandable graphite particles may also be forced into the base fabric (e.g., the adhesive material may be forced into the base fabric, the adhesive material may carry some of the expandable graphite particles into the base fabric, etc.). In embodiments where the optional web material is used, the web material may prevent the expandable graphite particles, the adhesive material, etc., from staining the equipment used to perform the method.

As the adhesive material is heated and/or pressed, an adhesive film or layer may be formed on the surface of the base fabric. A thickness of the adhesive film or layer and other characteristics of the adhesive film or layer (e.g., the extent to which it covers the surface of the base fabric, or its confluence, etc.) may correspond to a volume of adhesive material applied to the surface of the base fabric and to other factors, such as the size(s) of particles of the adhesive material, an amount of pressure or force applied to the adhesive material, etc. Accordingly, the thickness and other characteristics of the adhesive film or layer may be optimized by optimizing the collective volume of adhesive material applied to the surface of the base fabric, the size(s) of particles of the adhesive material, the amount of pressure applied to the mixture (including the adhesive material), etc. In embodiments where a sufficient volume of adhesive material was applied to the surface of the base fabric and a sufficient pressure is applied to the adhesive material, the adhesive film or layer formed from the adhesive material may cover the entire surface to which the mixture was applied (i.e., it may be confluent). In embodiments where a minimized volume of adhesive material was applied to the surface of the base fabric and/or little or no pressure is applied to the adhesive material, the adhesive film or layer formed from the adhesive material may only cover portions (e.g., spots, a layer with holes, etc.) of the surface of the base fabric (i.e., the adhesive film or layer may be nonconfluent).

Following the application of heat and/or pressure to the expandable graphite particles and adhesive material, the thermally conducive fabric may be allowed to cool.

In another aspect, a fire retardant fabric includes a base fabric with expandable graphite particles homogeneously distributed over a surface (e.g., a lower surface, etc.) of the base fabric. The fire retardant fabric may also include an adhesive material (e.g., adhesive spots, an adhesive layer, etc.) that secures the expandable graphite to the base fabric.

The base fabric may comprise any type of fabric. For example, the base fabric may comprise a conventional fabric (i.e., an unenhanced fabric), such as polyester, a low-density polyethylene (LDPE) fabric, or the like. As another example, the base fabric may comprise a conventional fabric (i.e., an unenhanced fabric) with some fire resistant or fire retardant properties. As yet another example, the base fabric may comprise a fabric that has been made with a fire resistant or fire retardant technology (e.g., a conventional fire resistant or fire retardant technology, another fire resistant or fire retardant technology, etc.).

The base fabric may have any desired weight (e.g., it may be ultra light (i.e., less than 100 g/m²), lightweight (i.e., 100 g/m² to 170 g/m²), midweight (i.e., 170 g/m² to 340 g/m²), heavyweight (i.e., 340 g/m² to 400 g/m²), or ultra heavy (i.e., more than 400 g/m²).

The expandable graphite particles may be dispersed over a surface of the fabric. More specifically, the expandable graphite particles may be evenly dispersed across the fabric, which may maximize the surface area of the fire retardant fabric that prevents extreme heat and/or fire from passing therethrough.

Optionally, some of the expandable graphite particles may be located within the base fabric. As another option, the expandable graphite particles may be distributed throughout the base fabric.

The adhesive material adheres, secures, or bonds the expandable graphite particles to the base fabric. The adhesive material may comprise a thermoplastic material. The thermoplastic material may adhere to a surface of the base fabric. In some embodiments, the thermoplastic material may extend into the base fabric (e.g., into spaces between yarns from which the base fabric is formed (e.g., knit, woven, etc.), into yarns from which the base fabric is formed, etc., by wicking, by force under pressure, etc.). The thermoplastic material may comprise an EVA, a TPU, etc. Alternatively, the adhesive material may comprise another suitable type of material that will adhere, secure, or bond the expandable graphite particles to the base fabric. The adhesive material may define a film or layer on a surface of the base fabric. The film or layer may be confluent or nonconfluent.

Optionally, a web material may be positioned over the expandable graphite particles and superimposed with the base fabric. A weight of the web material may be ultra light (i.e., under 100 g/m² (GSM)) or lightweight (i.e., 100 g/m² to 170 g/m²). More specifically, a weight of the web material may be about 5 g/m² to about 200 g/m². The web material may be formed from polyester, polyamide, polypropylene, or polyethelene. Such web material may be secured in place with the adhesive material. Alternatively, the web material may comprise or carry the adhesive material and, thus, secure itself and the expandable graphite particles in place.

The expandable graphite particles and adhesive material may impart the flame retardant fabric with good flame resistance or flame retardance while having a minimal effect on the feel and other properties of the fabric. Without limitation, the expandable graphite particles and adhesive material may maintain a feel and/or comfort of the fabric, the extent to which the fabric drapes (i.e., its pliability or flexibility), its stretchability, its durability, its breathability, and the like.

A few examples of articles of manufacture that may be made from the fire retardant fabric include, without limitation, apparel (e.g., athletic wear, etc.), bedding (e.g., mattress covers, mattress pads, sheets, blankets, pillowcases, etc.), upholstery, and the like. Mattresses, mattress pads, and upholstered bed bases formed from the fire retardant fabric may comply with the relevant sections of the U.S. Code of Federal Regulations (16 C.F.R. §§ 1632 and 1633) and the relevant Standards of the European Union (EN 597-1 and EN 597-2). The fire retardant fabric may also pass the Boston Flame Test (BFD IX-1).

Other aspects of the disclosed subject matter, as well as features and advantages of various aspects of the disclosed subject matter, should become apparent to those of ordinary skill in the art through consideration of the ensuing description, the accompanying drawings, and the appended claims.

### BRIEF DESCRIPTION OF THE DRAWINGS

In the drawings,
FIG. 1 illustrates an embodiment of a fire retardant fabric of this disclosure;
FIG. 2 illustrates another embodiment of a fire retardant fabric of this disclosure; and
FIG. 3 is a schematic representation of an apparatus for forming a fire retardant fabric of this disclosure.

### DETAILED DESCRIPTION

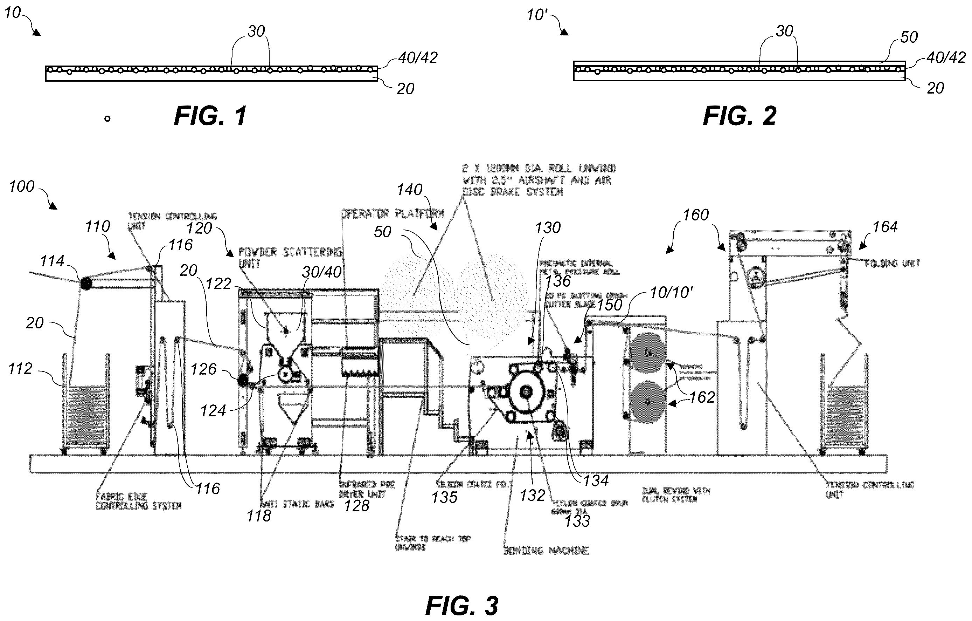

As illustrated by FIG. 1, a fire retardant fabric 10 includes a base fabric 20, expandable graphite particles 30, and an adhesive material 40. The expandable graphite particles 30 may reside on a surface of the base fabric 20 and/or extend into the base fabric 20. The adhesive material 40 may secure the expandable graphite particles 30 to the base fabric 20.

The base fabric 20 may comprise any suitable or desired fabric. Without limitation, the base fabric 20 may comprise a conventional fabric (i.e., an unenhanced fabric) that has low thermal conductivity, such as a polyester fabric, a low-density polyethylene (LDPE) fabric, or the like. As another example, the base fabric 20 may comprise a conventional fabric (i.e., an unenhanced fabric) with some thermal conductivity. As yet another example, the base fabric 20 may comprise a fabric that has been made with a thermal conductivity-enhancing technology (e.g., a conventional thermal conductivity-enhancing technology, another thermal conductivity-enhancing technology, etc.). The base fabric 20 may be of any desired composition (e.g., it may include synthetic fibers, synthetic fiber blends, natural fibers, natural fiber blends, blends of natural and synthetic fibers, etc.).

The base fabric 20 may have any desired weight (e.g., it may be ultra light (i.e. less than 100 g/m²), lightweight (i.e., 100 g/m² to 170 g/m²), midweight (i.e., 170 g/m² to 340 g/m²), heavyweight (i.e., 340 g/m² to 400 g/m²), or ultra heavy (i.e., more than 400 g/m²).

Graphite is a crystalline form of carbon in which carbon atoms are arranged in a hexagonal pattern, forming layers that are loosely bonded together. Expandable graphite is a form of intercalated graphite that can undergo significant expansion when exposed to heat (e.g., to temperatures of about 200° C or more). This expansion increases the surface area of the graphite, which in turn can enhance its ability to provide a thermally insulative barrier.

The expandable graphite particles 30 may be dispersed across the base fabric 20 in such a way that the expandable graphite particles 30 are spaced apart from each other. Alternatively, the expandable graphite particles 30 may substantially cover the base fabric 20; for example, adjacent expandable graphite particles 30 may contact each other. The expandable graphite particles 30 may be substantially evenly dispersed across the base fabric 20 or the expandable graphite particles 30 may be evenly dispersed across the base fabric 20. Substantially even or even distribution of the expandable graphite particles 30 may maximize the surface area of the fire retardant fabric 10 that is fire resistant or fire retardant.

At least some of the expandable graphite particles 30 may be carried by a surface 22 of the base fabric 20. At least some of the expandable graphite particles 30 may extend into the base fabric 20 (e.g., into spaces between yarns from which the base fabric 20 is formed (e.g., knit, woven, etc.), etc.).

The adhesive material 40 adheres, secures, or bonds the expandable graphite particles 30 to the base fabric 20. The adhesive material 40 may comprise a thermoplastic material. The thermoplastic material may adhere to a surface of the base fabric 20. In some embodiments, the thermoplastic material may extend (e.g., wick, bleed, seep, etc.) into the base fabric 20 (e.g., into spaces between yarns from which the base fabric 20 is formed (e.g., knit, woven, etc.), etc.). The thermoplastic material 40 may comprise an EVA, a TPU, or the like. A specific but nonlimiting example of a suitable EVA is an EVA 2048 powder with a particle size of about 100 µm to about 500 µm. A specific but nonlimiting example of a suitable TPU is TPU 4073, which is a high performance TPU. Alternatively, the adhesive material 40 may comprise another suitable type of material that will adhere, secure, or bond the expandable graphite particles 30 to the base fabric 20.

The adhesive material 40 may define a film or layer 42 on a surface 22 of the base fabric 20. The film or layer 42 may be confluent (i.e., cover the entire surface 22 of the base fabric) or nonconfluent (i.e., it may include regions of the adhesive material 40 that are spaced apart from each other).

Addition of the expandable graphite particles 30 and adhesive material 40 to the base fabric 20 provides a fire retardant fabric 10 that may substantially maintain the other properties of the base fabric 20 (e.g., its feel, its drape, its stretchability, its durability, its breathability, etc.).

Optionally, as illustrated by FIG. 2, a fire retardant fabric 10' may include a base fabric 20, expandable graphite particles 30, and an adhesive material 40, as described in reference to the fire retardant fabric 10 shown in FIG. 1, as well as a web material 50 superimposed with the base fabric 20 and positioned over the surface 22 that carries the expandable graphite particles 30.

The web material 50 may be ultra light (i.e., less than 100 g/m²), lightweight (i.e., 100 g/m² to 170 g/m²) or midweight (i.e., 170 g/m² to 340 g/m²). The web material may have a weight of about 5 g/m² to about 200 g/m². The web material 50 may have a weight that is less than a weight of the base fabric 20. In some embodiments, a weight of the web material 50 may not add significantly to a weight of the base fabric 20. The combined weights of the base fabric 20 and the web material 50 may be in the same weight range as the base fabric 20 alone (e.g., ultra light, lightweight, midweight, heavyweight, etc.).

The web material 50 may comprise polyester, polyamide, polypropylene, or polyethelene. Such web material may be secured in place with the adhesive material. Alternatively, the web material may comprise or carry the adhesive material and, thus, secure itself and the expandable graphite particles 30 in place.

Addition of the expandable graphite particles 30, adhesive material 40, and web material 50 to the base fabric 20 provides a fire retardant fabric 10' that may substantially maintain the other properties of the base fabric 20 (e.g., its feel, its drape, etc.).

Turning now to FIG. 3, an embodiment of an apparatus 100 for forming a fire retardant fabric 10, 10' (FIGs. 1 and 2, respectively) of this disclosure is depicted. The apparatus 100 includes a feeder 110, an applicator 120, a bonder 130, and a collector 160. The apparatus 100 may optionally include a source 140 of web material 50 (FIG. 2).

The feeder 110 may include a source 112 for a base fabric 20 (FIGs. 1 and 2). The feeder 110 may include one or more motors 114 and pulleys 116 that convey the base fabric 20 into the apparatus 100 under a desired tension and convey the base fabric 20 through the apparatus 100 at a desired rate. The feeder 100 may optionally include one or more static eliminators 118 that remove static electricity from the base fabric 20 as it is conveyed into and through the apparatus 100.

Initially, the feeder 110 may convey the base fabric 20 into the applicator 120. The applicator 120 may include a source 122 for the conductive particles 30 and adhesive material 40. The applicator 120 may apply the expandable graphite particles 30 and adhesive material 40 to the base fabric 20 in any suitable manner. For example, as illustrated, the source 122 may be associated with a powder scatterer 124, which may dispense a mixture of the expandable graphite particles 30 and particles of the adhesive material 40 onto the base fabric 20 as the base fabric 20 is conveyed through the applicator 120. Alternatively, such a powder scatterer 124 may dispense adhesive material 40-coated expandable graphite particles 30 onto the base fabric 20 as the base fabric 20 is conveyed through the applicator 120. As an alternative to the illustrated source 122 and powder scatterer 124, the apparatus 100 may comprise a source (e.g., a roll, etc.) of a transfer sheet (e.g., a strip, a band, etc.; a transfer paper, etc.) to which the expandable graphite particles 30 and adhesive material 40 have been pre-applied (e.g., scattered onto, printed onto, etc.), and the transfer sheet may transfer the expandable graphite particles 30 and adhesive material 40 to the base fabric 20. In embodiments where a web material 50 is to be applied to the base fabric 20, the powder scatterer 124 may dispense the expandable graphite particles 30 but not any adhesive material 40.

Optionally, the applicator 120 may include one or more heaters 126, 128. For example, a heater 126 may preheat the base fabric 20 as it enters the applicator 120 and before the expandable graphite particles 30 and adhesive material 40 are applied to the base fabric 20. Such a heater 126 may preheat the base fabric 20 to a temperature that will heat the adhesive material 40 to a sufficient temperature to enable it to adhere to the base fabric 20 and the expandable graphite particles 30. As another example, a heater 128 may heat the base fabric 20 after the expandable graphite particles 30 and adhesive material 40 have been applied to it to enable the adhesive material 40 to adhere to the base fabric 20 and to the expandable graphite particles 30 and or to evaporate, or drive, any moisture from the base fabric 20, expandable graphite particles 30, and adhesive material 40. With the expandable graphite particles 30 and adhesive material 40 on the base fabric 20, any transfer sheet may be removed from the base fabric 20.

From the applicator 120, the feeder 110 may convey the base fabric 20, conductive particles 30, and any adhesive material 40 to the bonder 130. In embodiments where the apparatus 100 includes a source 140 of web material 50, the feeder 110 may also convey the web material 50 to the bonder 130. The bonder 130 may bond the conductive particles 30 and the web material 50, if any, to the base fabric 20. More specifically, the bonder 130 may cause or enable the adhesive material 40 and/or the web material 50 to bond the conductive particles 30 and the optional web material 50 to the base fabric 20.

The bonder 130 may include a conveyor 132 with a drum 133 (e.g., a Teflon coated drum, etc.) and a series of rollers 134 that carry and move a belt 135 (e.g., silicone coated felt, etc.) past a pressure roller 136. The belt 135 may carry the base fabric 20 and the optional web material 50 through the bonder 130 to enable the bonder 130 (e.g., the pressure roller 136, etc.) to apply heat and/or pressure to the adhesive material 40 and/or any web material 50 to at least partially melt the adhesive material 40 and/or any web material 50 and enable it/them to secure the expandable graphite particles 30 and the optional web material 50 to the base fabric 20. The result is a fire retardant fabric 10 (FIGs. 1 and 2).

From the bonder 130, the feeder 110 may conveys the fire retardant fabric 10 past an optional cutter 150. The cutter 150 may comprise any suitable cutter for fabric. Without limitation, the cutter 150 may comprise a crush cutter.

The fire retardant fabric 10 is ultimately conveyed to a collector 160. The collector 160 may comprise one or more reels 162, which may receive and roll the fire retardant fabric 10. Alternatively or additionally, the collector 160 may comprise a folder 164 folds and/or stacks the fire retardant fabric 10.

With returned reference to FIGs. 1 and 2, in normal use, the expandable graphite particles 30 of a fire retardant fabric 10, 10' of this disclosure may convey heat away from an individual. If the fire retardant fabric 10, 10' is subjected to a sufficient temperature (e.g., 140° C to 230° C, about 200° C or more, etc.), as may occur when the fire retardant fabric 10, 10' is exposed to a heater, a heated tool (e.g., an iron, a heated hairstyling tool, etc.), hot coals, cigarette or cigar ash, a flame, or the like, the expandable graphite particles 30 may expand, which may prevent ignition of the flame retardant fabric 10, 10' or limit the extent to which the flame retardant fabric 10, 10' ignites.

Although the disclosure provides many specifics, the specifics should not be construed as limiting the scope of any of the claims, but merely as providing illustrations of some embodiments of elements and features of the disclosed subject matter that fall within the scopes of the claims. Other embodiments of the disclosed subject matter may be devised that are also within the scopes of the claims. Accordingly, the scope of each claim is limited only by its plain language and the legal equivalents thereto.

## Claims

1. A method for applying a fire retardant material to a fabric, comprising:
mixing expandable graphite particles and adhesive particles together to form a homogenous mixture;
evenly applying the homogenous mixture to a surface of a base fabric; and
heating the homogenous mixture to bond the adhesive particles to adjacent expandable graphite particles and to the base fabric.

2. The method of claim 1, wherein mixing the expandable graphite particles and the adhesive particles together comprises mixing the expandable graphite particles with adhesive particles comprising an ethylene vinyl acetate (EVA).

3. The method of claim 1, wherein mixing the expandable graphite particles and the adhesive particles together comprises mixing the expandable graphite particles with adhesive particles comprising a thermoplastic polyurethane (TPU).

4. The method of any of claims 1-3, further comprising:
preheating the base fabric before evenly applying the homogenous mixture to the surface of the fabric.

5. The method of any of claims 1-4, wherein evenly applying the homogenous mixture comprises powder scattering the homogenous mixture over the surface of the base fabric.

6. The method of any of claims 1-4, wherein evenly applying comprises positioning a transfer sheet carrying a layer of the homogenous mixture to the surface of the base fabric.

7. The method of any of claims 1-6, wherein heating the homogenous mixture includes applying pressure to the homogenous mixture.

8. The method of any of claims 1-7, further comprising:
applying a web material to the homogenous mixture on the surface of the base fabric.

9. A fire retardant fabric manufactured according to a method of any of claims 1-8, comprising:
a base fabric including a lower surface and an outer surface;
expandable graphite particles homogenously distributed over the lower surface of the base fabric; and
an adhesive material bonded to the expandable graphite particles and to the lower surface of the base fabric to bond the expandable graphite particles to the base fabric.

10. The fire retardant fabric of claim 9, wherein the base fabric comprises polyester.

11. The fire retardant fabric of claim 9 or claim 10, wherein the adhesive material comprises ethylene vinyl acetate (EVA) or a thermoplastic polyurethane (TPU).

12. The fire retardant fabric of any of claims 9-11, having substantially a same hand feel and drape as the fabric prior to application of the expandable graphite particles and the adhesive material thereto.

13. The fire retardant fabric of any of claims 9-12, further comprising:
a web material over the expandable graphite particles, the adhesive material, and the lower surface of the fabric.

14. The fire retardant fabric of claim 13, wherein the web material comprises an adhesive material, polyester, polyamide, polypropylene, or polyethylene.

15. The fire retardant fabric of claim 16, wherein the web material is an ultra light material.
